# EUROPEAN PATENT APPLICATION

(11) **EP 4 303 496 A1**
(43) Date of publication of application: **10.01.2024**
(21) Application number: 23183927.5
(22) Date of filing: 06.07.2023
(51) Int. Cl.: F24D 3/14, F24D 3/18, E04C 2/52, F24F 5/00

(54) **COMPOSITE HEATING PANEL**

(30) Priority: 07.07.2022 GB 202209979
(71) Applicant: Stud Connector (IP) Limited, London EC2M 7PY (GB)
(72) Inventor: CONYBEARE, Nigel Paul, TRING, HP23 4NJ (GB)
(74) Representative: Dummett Copp LLP

(57) **Abstract**

A composite heating panel comprises a front panel having opposite front and rear surfaces; a heat dissipation panel in contact with the rear surface of the front panel; an insulated panel; and an elongate length of tubing for receiving a flow of fluid therethrough, the fluid being at above ambient temperature. The length of tubing is disposed between the insulated panel and the heat dissipation panel, and the length of tubing follows a tortuous flow path including at least one loop.

## Description

### FIELD OF THE INVENTION

This invention relates to the field of heating panels. In particular this invention relates to composite heating panels that may be used as wall panels. The composite heating panels may form part of a kit or system for forming stud walls, partition walls or other internal walls of a building.

### BACKGROUND TO THE INVENTION

The demand to move away from traditional fossil fuels towards renewable energy sources is increasing. In the field of heating for domestic residencies and commercial buildings this has led to the development of air source heat pumps that may be used to replace fossil fuel boilers. Traditional oil-fired or gas-fired boilers burn fuel to heat water that, in turn, delivers heat to the buildings, typically through wall mounted radiators or via underfloor heating systems. Air source heat pumps absorb heat from the air external to the building into a liquid refrigerant and then use a compressor to increase the temperature of that refrigerant. The refrigerant then transfers the heat to an indoor heating system including, for example, radiators or underfloor heating systems.

While air source heat pumps are considered to be more efficient than traditional oil or gas boilers, some of this efficiency is lost as the delivery of the heat to the internal spaces within the building is currently either via underfloor pipework that is embedded in a high mass construction material like concrete or via conventional wall mounted radiators.

When the connection of the air source heat pump is to an underfloor piped system in a high mass (concrete) slab heat is only generated when the mass or slab is heated to a temperature where it will start to radiate heat. To generate and maintain this amount of heat the water temperature within the underfloor pipes must be sufficient to raise the temperature of the mass. Once the mass is to temperature the flow of hot water is controlled to ensure that the temperature is maintained at the desired level to allow the mass to radiate the right amount of heat to ensure the temperature of the room is at the required comfort level. Once the mass has reached the required temperature the energy required to keep the desired level of heating is then reduced, such that the system is then generally considered to become more economical to run. However, a disadvantage of this system is that the time taken to reach the required temperature can be significant and once up to temperature it is generally considered to be uneconomical to turn the system off as the start-up time, i.e. the time to heat up to the required temperature, takes too long. Therefore, when using an air source heat pump with a high mass underfloor system the system of control is very limited and, therefore, becomes uneconomical in the long term.

When using an air source heat pump with a standard radiator system, the water temperature in the radiator needs to be comparable to or substantially the same as that which is generated by a standard fossil fuel boiler, which is typically about 70-80 °C. It is thought, however, that to generate this temperature in the water, the cost of the electricity used to run the sir source heat pump would often be greater than the cost of the fossil fuels used in the traditional boiler. Accordingly, while the ability to control the system using both radiator thermostats and room thermostats allows the system to quickly react to varying conditions, it will still be expensive to run.

Against this background it is an object of the present invention to provide an efficient method of delivering controllable heating to an interior space.

### SUMMARY OF THE INVENTION

A first aspect of the invention provides a composite heating panel comprising:
a front panel having opposite front and rear surfaces;
a heat dissipation panel in contact with the rear surface of the front panel;
an insulated panel; and
an elongate length of tubing for receiving a flow of fluid therethrough, the fluid being at above ambient temperature,
wherein the length of tubing is disposed between the insulated panel and the heat dissipation panel, and the length of tubing follows a tortuous flow path including at least one bend or loop.

The rear surface of the front panel preferably includes a channel in which at least a part of the length of tubing is seated. Preferably the heat dissipation panel is corrugated and includes at least one channel, and preferably the channel of the heat dissipation panel is disposed in the channel of the front panel, and a part of the length of tubing is seated in the channel of the heat dissipation panel.

The length of tubing may form a pipework layer including a plurality of straight sections and a plurality of 180° bends. The pipework layer may include a first 180° bend that lies on an inside of a second 180° bend. In some embodiments the pipework layer comprises a first set of 180° bends at a first end of the front panel, a second set of 180° bends at a second end of the front panel, and the plurality of straight sections extend between the first and second sets of 180° bends.

In preferred embodiments the channel in the rear surface of the front panel is configured to receive a full length of the tubing between an inlet and an outlet.

Preferably the heat dissipation panel comprises a plurality of straight channels in which the straight sections of the pipework layer are seated.

Preferably the heat dissipation panel is bonded to the front panel.

Preferably the insulated panel is bonded to the heat dissipation panel.

In some embodiments the composite heating panel may further comprise a backing board in contact with the insulated panel. One or both of the front panel and the backing board may be made from a gypsum fibre board.

In some embodiments the composite heating panel may further comprise an or the inlet at a first end of the length of tubing and an or the outlet at a second end of the length of tubing, the inlet and the outlet each extending through an aperture in the front panel.

The composite heating panel preferably further comprises a pair of adjustable legs.

In some embodiments at least one side edge of the insulated panel includes a rebate.

A second aspect of the invention provides a wall system comprising:
a stud member;
a composite heating panel according to the first aspect of the invention; and
a pre-fabricated wall panel comprising a front panel, a rear panel and an insulating panel between the front and rear panels.

In preferred embodiments a thickness of the composite heating panel is the same as a thickness of the pre-fabricated wall panel.

A third aspect of the invention provides a wall system comprising:
a composite heating panel according to the first aspect of the invention; and
an air source heat pump.

A fourth aspect of the invention provides an interior wall comprising:
a stud member; and
a composite heating panel according to the first aspect of the invention positioned adjacent the stud member and secured to the stud member.

In preferred embodiments the composite heating panel is secured to the stud member on a first side of the stud member. The interior wall may further comprise a composite wall panel secured to the stud member on a second side of the stud member. The composite wall panel may comprise a front panel made of a gypsum fibre board and an insulating panel.

A fifth aspect of the invention provides a method of constructing an interior wall comprising:
positioning a composite heating panel according to the first aspect of the invention adjacent a stud member; and
securing the composite heating panel to the stud member using at least one mechanical fixing element.

In embodiments in which at least one side edge of the insulated panel of the composite heating panel includes a rebate, the method preferably comprises locating the stud member in the rebate so that a part of the front panel of the composite heating panel overlaps the stud member.

In some embodiments the method may further comprise the step of joining the length of tubing to a pipe of a building's heating system. The building's heating system may include an air source heat pump.

Preferred and/or optional features of each aspect and embodiment described above may also be used, alone or in appropriate combination, in the other aspects and embodiments also.

The creation of the composite heating panel according to the first aspect of the invention was driven by the need to create an energy efficient radiant panel to produce the maximum heat output from the minimum heat input and with the minimum heat loss. It was also desirable to have the ability to reverse the heat loss in a cooling cycle. The composite heating panel is designed to target the direction of the heating and cooling so that energy is not lost or misdirected, as can be the case with traditional radiators that will generally heat or cool part of the building fabric adjacent and behind the radiator, as well as the general area around the radiator.

To maximise the benefits obtained from the composite heating panel, the present invention also provides a wall system that includes at least one composite heating panel. The wall system includes a plurality of insulated wall panels that maintain the desired temperature within the boundaries of the wall system, i.e. within the internal space bounded by the wall system. The wall system of the present invention is constructed in such a way that the system may be incorporated in current methods of construction and may also be used as a retrofit solution in older buildings.

Most new building construction projects have internal walls constructed using lightweight steel members which are clad on one side with a sheathing board. Loose fill insulation is installed between the lightweight steel frame members then covered or closed with another sheet of sheathing. Once constructed this walling system is then plastered to provide a final finish, before painting and decorating. Generally, the number of layers of sheathing and the amount of insulation that is added is primarily dictated by a specific performance requirement, typically either fire proofing or acoustic performance. To date, consideration for thermal loss has not been the primary driver in the specification and construction of these walling systems. Additionally, no consideration is taken of interstitial condensation as currently heat loss is not being considered.

The wall system of the present invention uses the same basic lightweight steel structure currently being used within the construction industry, in which a head track is fitted to a ceiling, a base track is fitted to a floor slab, and one or more vertical members are installed between the head track and the base track and used to support sheathing boards. However, instead of the sheathing boards and insulation being separate elements, a laminated panel is produced or manufactured off-site incorporating and laminating sheathing boards and an insulation panel. The use of high resistant closed cell or open cell insulation increases the resistance to heat loss, with the additional benefit that the risk of both condensation and interstitial condensation is minimal.

It will be appreciated that one or more composite heating panels may be included in each wall system to radiate heat into the internal space or room defined by the wall system.

The composite heating panels of the present invention include a length of pipe through which a heated fluid may flow. A rear panel of the composite heating panel is insulated and heat from the pipe radiates from a front panel of the composite heating panel. To provide a composite heating panel having maximum efficiency, it is preferable to embed as long a length of pipework as possible within the specified panel height and width. It is preferable if the height and width of the composite heating panel are the same as the height and width of the standard wall panels or sheathing boards. This allows the composite heating panel to be installed in existing wall systems and to be utilised with current methods of construction. Accordingly, the width of the composite heating panel is preferably governed by the standard width or distance between vertical members in the stud frame, which is typically about 600 mm. Similarly, the height of the composite heating panel is governed by the floor to ceiling height, or the distance between the header track and the base track.

To achieve the maximum efficiency, the layout of the pipework runs within the panel is designed so that the incoming heating/cooling fluid flowing through the pipework stays within the wall panel for the maximum length of time to allow the panel to absorb the maximum amount of energy.

During heating and cooling phases it is possible that the length of the pipe will increase or decrease. It is therefore preferable to provide means to allow the pipework to be able to expand and contract and move freely within the panel to accommodate this movement.

It is also preferable to position the pipework as close as possible to the front panel of the composite heating panel to maximize heat radiation from the panel and to minimise heat loss within the material of panel. In preferred embodiments, therefore, the front panel is machined to allow the pipework to be embedded within it. In this way the pipework is disposed as close as possible to a front surface of the front panel.

Embedding pipework has generally been considered a risk as the pipework could, at any phase within its life cycle, be damaged and unrepairable. This risk is heighted when embedding the pipework within a wall where there is a risk that the pipework could be damaged by nails or screws used to mount items on the wall. In preferred embodiments, therefore, the pipe is protected by a steel plate within the composite heating panel. The steel plate is preferably disposed between the pipework and the front surface of the front panel. It will be appreciated that the steel panel also helps to dissipate heat from the pipework so that heat is more evenly radiated from the composite heating panel.

To prevent or minimise heat loss through the back of the composite heating panel and to provide rigidity to the composite heating panel, a layer of insulation is preferably bonded to the steel plate so that the pipework is surrounded by and enclosed between the steel plate and the insulation. A backing board is preferably bonded to the insulation to provide a rear surface of the composite heating panel.

The selection of materials used in the construction of the composite heating panels is important for the performance of the panel with the system still required to be non-combustible, provide an aesthetic appearance similar to existing wall finishes, and have the ability to be cut and machined. The composite heating panel preferably includes a front panel comprising a gypsum fibre board. In preferred embodiments the gypsum fibre board is machined or otherwise shaped to allow the steel pipe protection plate and the pipework expansion loops to be embedded within its thickness. Preferably only 4 mm of gypsum fibre board covers the steel plate to ensure efficient heat transfer from the front surface of the composite heating panel.

### BRIEF DESCRIPTION OF THE DRAWINGS

The invention will now be further described by way of example only and with reference to the accompanying drawings, in which like reference signs are used for like features, and in which:
Figure 1 is an exploded view of a composite heating panel according to an embodiment of the invention;
Figure 2 shows a front panel of the composite heating panel of Figure 1;
Figure 3 illustrates an embodiment of a elongate length of pipe having a tortuous flow path that may form part of the composite heating panel of Figure 1;
Figure 4 shows part of a heat dissipation panel of the composite heating panel of Figure 1;
Figure 5 is an end view of the heat dissipation panel of Figure 4 showing channels formed in the heat dissipation panel;
Figure 6 illustrates a wall panel comprising the composite heating panel of Figure 1;
Figure 7 shows end portions of the wall panel of Figure 6;
Figure 8 is a cross-sectional view along the line VIII-VIII of Figure 7;
Figure 9 shows a wall including the wall panel of Figure 6;
Figure 10 shows internal details of the wall of Figure 9; and
Figure 11 is an exploded view of the wall of Figure 9.

### DESCRIPTION OF THE PREFERRED EMBODIMENTS

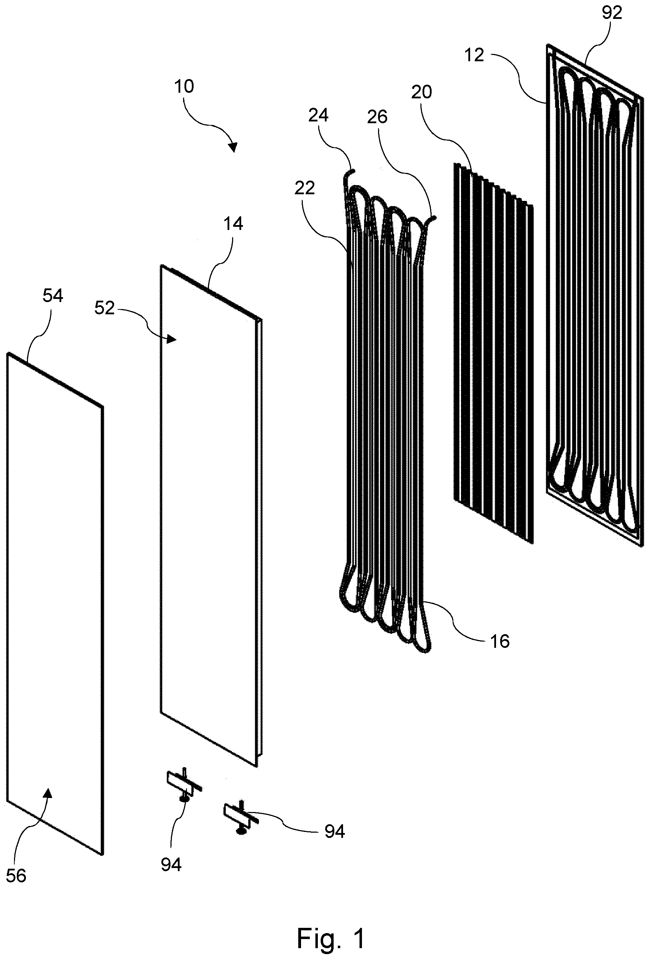

A composite heating panel 10 according to a preferred embodiment of the invention is shown in Figures 1, 7 and 8. The composite heating panel 10 is designed to be used as a wall panel in the construction of an internal or stud wall. However, it will be appreciated that the composite heating panel 10 may be used in other applications and that the materials from which the components of the composite heating panel 10 are made would be selected appropriately.

The composite heating panel 10 comprises a front panel or front face board 12 and an insulated panel 14. A length of pipe or tubing 16 is disposed between the front panel 12 and the insulated panel 14. The tubing 16 provides a conduit through which, in use, a fluid flows. The fluid flowing through the tubing 16 will typically be above ambient temperature. In preferred embodiments the temperature of the fluid is less than 70 °C, more preferably between 20 °C and 70 °C, and more preferably between 25 °C and 50 °C. The tubing 16 is preferably made of a suitable polymeric or metal material.

In use, the heat from the fluid flowing through the tubing 16 is transmitted through the front panel 12 and is radiated from a front surface 18 of the front panel 12. The insulated panel 14 minimises heat loss in a direction away from the front panel 12 to improve the efficiency of the composite heating panel 10.

A heat dissipation panel 20 is disposed between the tubing 16 and the front panel 12. One function of this heat dissipation panel 20 is to transfer heat energy more efficiently from the tubing 16 to the front panel 12 and, as such, acts as a form of heat sink. The heat dissipation panel 20 also transfers the heat energy from the tubing 16 more evenly over the area of the front panel 12. As such, heat is more evenly radiated from the front surface 18 of the front panel 12 and the presence of "hot spots" and "cool spots" over the front surface 18 of the front panel 12 is minimised.

A further function of the heat dissipation panel 20 is to protect the tubing 16 from damage. When this composite heating panel 10 is used as a wall panel, nails, hooks or other wall fixings may be wrongly inserted into the front panel 12. To prevent these wall fixings damaging the underlying tubing 16, the heat dissipation panel 20 provides a barrier layer between the tubing 16 and the front panel 12.

To fulfil these functions, the heat dissipation panel 20 is preferably made of a suitable metal material. In preferred embodiments the heat dissipation panel 20 is made of steel.

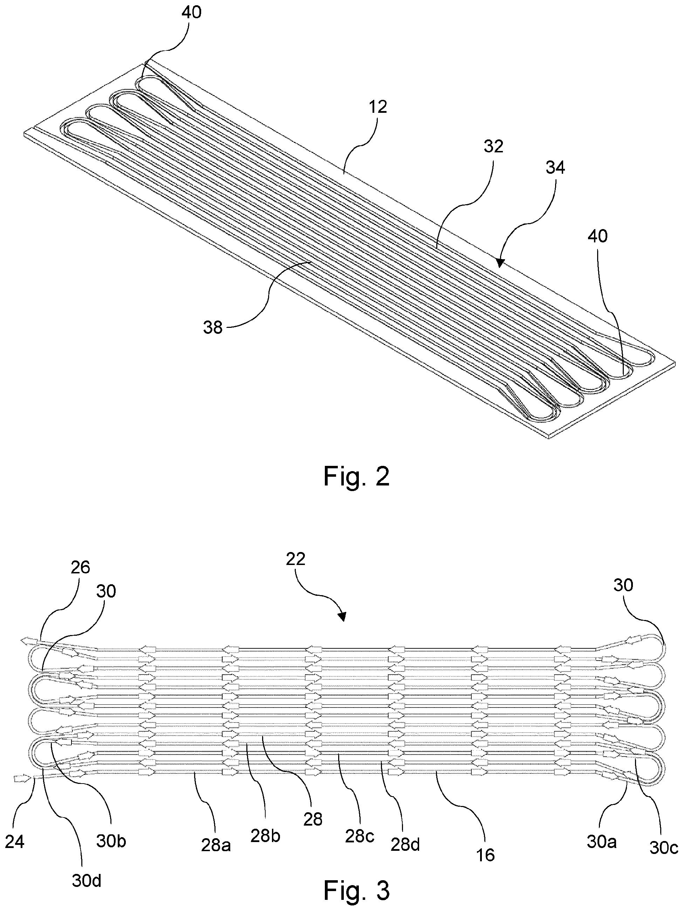

To ensure that the maximum amount of heat energy is transferred from the fluid flowing through the tubing 16 to the front panel 12, it is desirable if the length of tubing 16 in contact with or in close proximity to the front panel 12 is as long as possible. The tubing 16, therefore, preferably follows a tortuous or looping path over or within an area bounded by edges of the front panel 12. The length of tubing 16 lies in a single pipework layer 22 within this area. Referring in particular to Figure 3, the pipework layer 22 includes a pipe inlet 24 through which the fluid enters the pipework layer 22 and a pipe outlet 26 through which the fluid exits the pipework layer 22. It will be understood that the length of tubing 16 forming the pipework layer 22 is continuous with further lengths of tubing extending from each of the pipe inlet 24 and pipe outlet 26. These further lengths of tubing connect the pipework layer 22 to a heating system of a building in which the composite heating panel 10 is installed. Accordingly, there does not have to be a joint or connection at the pipe inlet 24 and pipe outlet 26 and these may just be the points at which the tubing 16 enters the area of the front panel 12 and exits the area of the front panel 12 respectively.

The tubing 16 follows a looping path through the pipework layer 22 between the pipe inlet 24 and pipe outlet 26. In preferred embodiments the pipework layer 22 comprises a plurality of straight sections 28 of tubing 16 connected by 180° bends or loops 30. In the example illustrated in Figure 3, the pipe inlet 24 is disposed at a first side and at a first end of the pipework layer 22. From the inlet 24, the tubing 16 extends in a direction towards a second end of the pipework layer 22. A 180° bend is formed at the second end of the pipework layer 22 and then the tubing 16 extends in a direction back towards the first end of the pipework layer 22. The tubing 16 follows a winding path generally across the pipework layer 22 from the first side to an opposite second side. In this example the pipe outlet 26 is disposed at the second side and at the first end of the pipework layer 22.

In preferred embodiments the path of the tubing 16 within the pipework layer 22 is such that the direction of fluid flow through some 180° bends 30 is generally in a direction from the first side to the second side and in other 180° bends 30 is generally in a direction from the second side to the first side. In the example illustrated in Figure 3, a first straight section 28a of tubing 16 extends adjacent the first side, and fluid flow through this section 28a is generally from the first end to the second end of the pipework layer 22, as illustrated by the arrows. A first bend 30a at the second end then leads to a second straight section 28b of tubing 16 further from the first side. Fluid flow through this second section 28b is generally from the second end to the first end of the pipework layer 22 and the second straight section 28b terminates at a second bend 30b at the first end of the pipework layer 22. The direction of fluid flow through this second bend 30b is generally in a direction back towards the first side, and a third straight section 28c of tubing 16 extending from the second bend 30b is disposed between the first and second straight sections 28a, 28b of tubing 16. A third bend 30c at the first end is disposed inside the first bend 30a, with fluid flow through the third bend 30c generally in an opposite direction to fluid flow through the first bend 30a. A fourth straight section 28d of tubing 16 is disposed between the first and third sections 28a, 28c, and a fourth bend 30d extends around the outside of the second bend 30b at the first end of the pipework layer 22. This layout of the tubing 16, including four straight sections 28 and four bends 30, is referred to as a reverse flow portion. Preferably the pipework layer 22 includes at least two reverse flow portions. These reverse flow portions may be connected by additional straight sections 28 of tubing 16 and additional 180° bends 30.

Providing reverse flow portions as described maximises the length of tubing within the pipework layer 22 while maintaining a bending radius of the tubing 16 at each of the 180° bends 30 that is equal to or greater than the minimum bending radius of the tubing 16. This layout of tubing 16 also ensures that there is minimum temperature differential between neighbouring sections of tubing 16 within the pipework layer 22 compared to a layout in which the same length of tubing 16 follows a first looped path from the first side to the second side of the pipework layer 22 and then follows a second looped path returning from the second side to the first side. This increases the efficiency of the heat transfer through the front panel 12 as there is less heat transfer between different regions within the pipework layer 22.

To maximise the efficiency of the composite heating panel 10, and to maximise the amount of heat energy being radiated from the front surface 18 of the front panel 12, the pipework layer 22 is preferably disposed as close to the front surface 18 as possible. Because the front panel 12 also has a structural function, it is not always desirable to decrease the thickness of the front panel 12 over the whole area of the front panel 12. In preferred embodiments, therefore, a channel 32 is provided in a rear surface 34 of the front panel 12 for receiving the pipework layer 22.

As shown most clearly in Figure 2, the channel 32 in the rear surface 34 of the front panel 12 has a shape that corresponds to the path of the tubing 16 of the pipework layer 22. In this way, the channel 32 includes a plurality of straight sections 38 and a plurality of bends or loops 40. Each of the straight sections 28 of the tubing 16 is received in a respective one of the straight sections 38 of the channel 32 and each of the bends 30 of the tubing 16 is received in a respective one of the bends 40 of the channel 32.

In preferred embodiments the channel 32 is formed in the rear surface 34 of the front panel 12 by computerised numerical control (CNC) machining. In other embodiments the front panel 12 may be moulded or otherwise cut or shaped to form the channel 32.

A depth or distance between a base of the channel 32 and the front surface 18 of the front panel 12 is preferably minimised to result in efficient heat transfer from the tubing 16 to the front surface 18. This depth or distance is preferably between 1 mm and 10 mm, more preferably between 1 mm and 5 mm, and more preferably about 4 mm.

The front panel 12 is preferably made from a gypsum fibre board.

As described above, the heat dissipation panel 20 is disposed between the tubing 16 and the front panel 12. In this embodiment the heat dissipation panel 20 is disposed between the straight sections 28 of tubing 16 and a central region of the front panel 12. The heat dissipation panel 20 is therefore configured to be at least partially seated in the straight sections 38 of the channel 32.

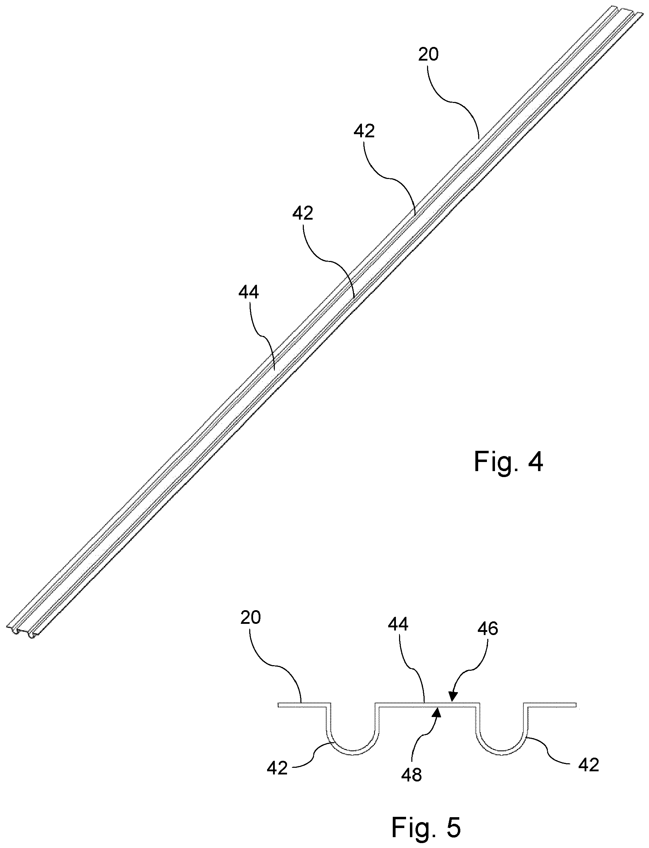

Referring now to Figures 4 and 5, the heat dissipation panel 20 is preferably formed from sheet material pressed or otherwise formed into a corrugated shape. The heat dissipation panel 20 therefore preferably comprises a plurality of channels 42. The channels 42 are straight and preferably extend parallel to each other along a length of the heat dissipation panel 20. Flat bridge sections 44 extend between the channels 42. First surfaces of the bridge sections 44, facing in a direction away from the channels 24, define a primary bonding surface 46 of the heat dissipation panel 20. This primary bonding surface 46 is preferably planar. Second, opposite surfaces of the bridge sections 44 provide secondary bonding surfaces 48.

The heat dissipation panel 20 may be formed as a single sheet; however, in preferred embodiments, to ease manufacture, the heat dissipation panel 20 is formed from a number of separate sections or parts, as shown in Figures 4 and 5. Each of these sections or parts may include two, three or four channels 42, for example. These sections or parts are then positioned adjacent each other to create the complete heat dissipation panel 20.

During use of the composite heating panel 10, the temperature of the fluid flowing through the tubing 16 is likely to increase and decrease. These changes in temperature may result in an expansion or contraction of the tubing 16. Accordingly, movement of the tubing 16 within the composite heating panel 10 must be accommodated.

The transverse or width dimension, as well as the depth of each of the channels 42, is such that the tubing 16 may be fully seated within the channels 42 with some freedom of movement of the tubing 16 to accommodate expansion and contraction of the tubing 16 due to heating and cooling. Both a width of the channels 42 and a depth of the channels 42 is, therefore, slightly greater than an outer diameter of the tubing 16.

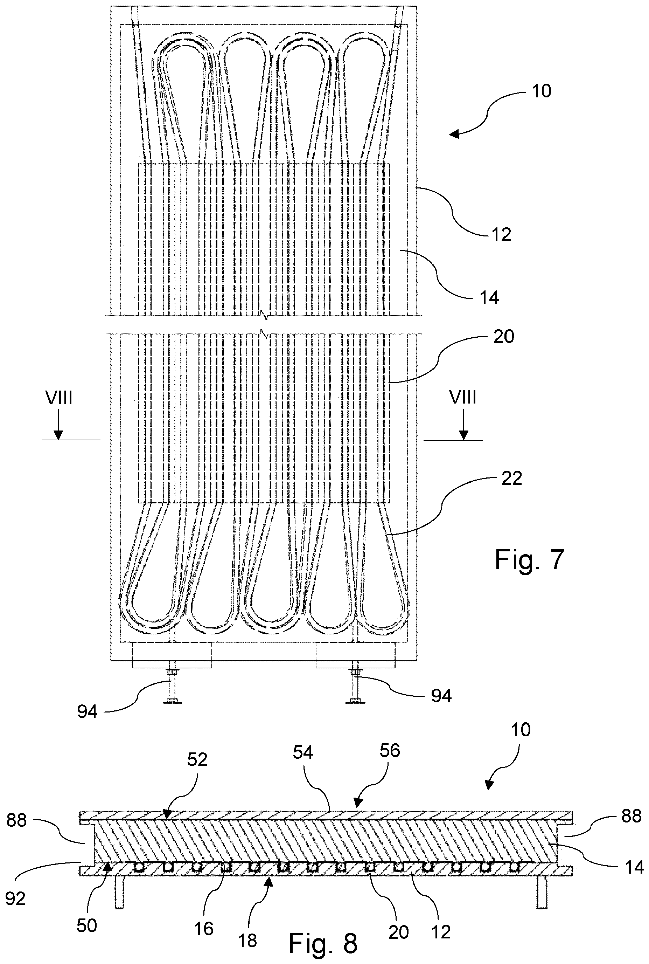

The heat dissipation panel 20, or each of the sections forming the heat dissipation panel 20, is engaged with the rear surface 34 of the front panel 12 so that the channels 42 are seated or received in the straight sections 38 of the channel 32. The heat dissipation panel 20 is preferably bonded to rear surface 34 of the front panel 12, as illustrated in Figure 8. In particular, the secondary bonding surfaces 48 of the heat dissipation panel 20 are bonded to the rear surface 34 of the front panel 12. As well as maintaining the heat dissipation panel 20 in the correct position with respect to the front panel 12, bonding the heat dissipation panel 20 to the front panel 12 also improves the structural rigidity of the front panel 12.

The pipework layer 22 is seated in the channels 42 of the heat dissipation panel 20, as illustrated in Figure 8. Due to the dimensions of the channels 42, the pipework layer 22 does not protrude from the primary bonding surface 46 of the heat dissipation panel 20. Accordingly, the insulated panel 14 may be placed in contact with the primary bonding surface 46 of the heat dissipation panel 20 and the regions of the rear surface 34 of the front panel 12 surrounding the heat dissipation panel 20. The insulated panel 14 is preferably bonded to the primary bonding surface 46 of the heat dissipation panel 20. The insulated panel 14 may also be bonded to the rear surface 34 of the front panel 12 surrounding the heat dissipation panel 20. Importantly, the insulated panel 14 is not bonded to the pipework layer 22 so that the tubing 16 remains free to move within the confines of the channels 42 of the heat dissipation panel 20 and the channel 32 of the front panel 12.

The insulated panel 14 is preferably in the form of a flat panel having planar front and rear surfaces 50, 52. As described above, the front surface 50 is preferably bonded to one or both of the heat dissipation panel 20 and the front panel 12. A thickness of the insulated panel 14, between the front and rear surfaces 50, 52, is preferably greater than a thickness of the front panel 12.

The insulated panel 14 preferably comprises a rigid or semi-rigid sheet of insulation material. The insulation material may be either an open cell or a closed cell material.

In situations in which the composite heating panel 10 is used as a wall panel, the front surface 18 of the front panel 12 may be plastered to provide a final finish, before painting and decorating.

Additionally, in these situations, it may be desirable to provide a backing board 54 that covers the rear surface 52 of the insulated panel 14. The backing board 54 provides additional structural rigidity to the composite heating panel 10. The backing board 54 also provides a rear surface 56 of the composite heating panel 10, opposite to the front surface 18 of the front panel 12, that may be plastered to provide a final finish, before painting and decorating. The backing board 54 may be made of the same material as the front panel 12. The backing board 54 may be made from a gypsum fibre board.

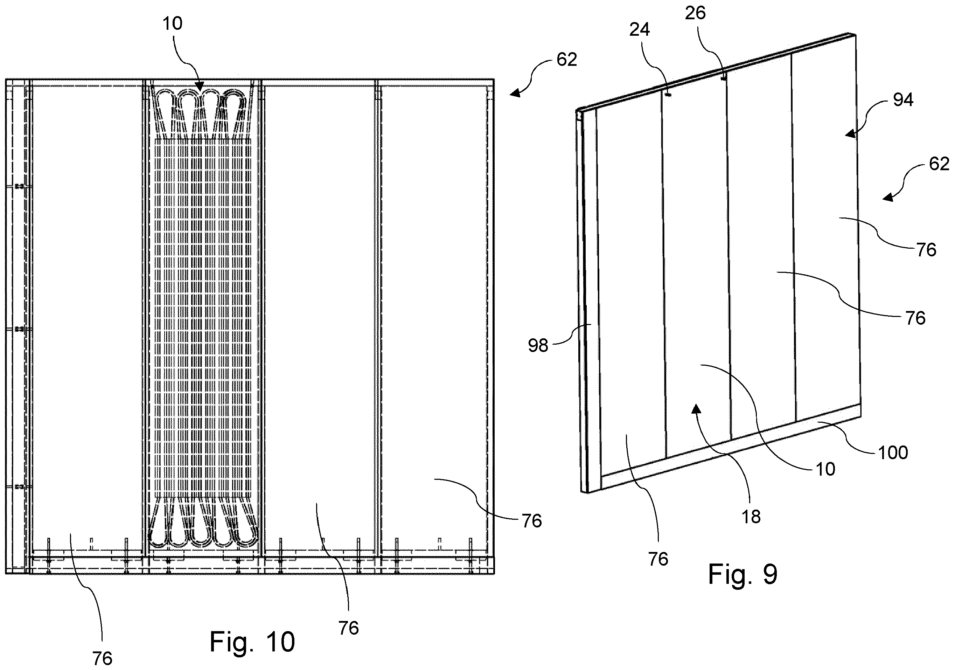

Referring now to Figures 9 to 11, the composite heating panel 10 described above may be used as a heated wall panel 10 and form part of a prefabricated walling system 60 for the construction of an internal or stud wall 62.

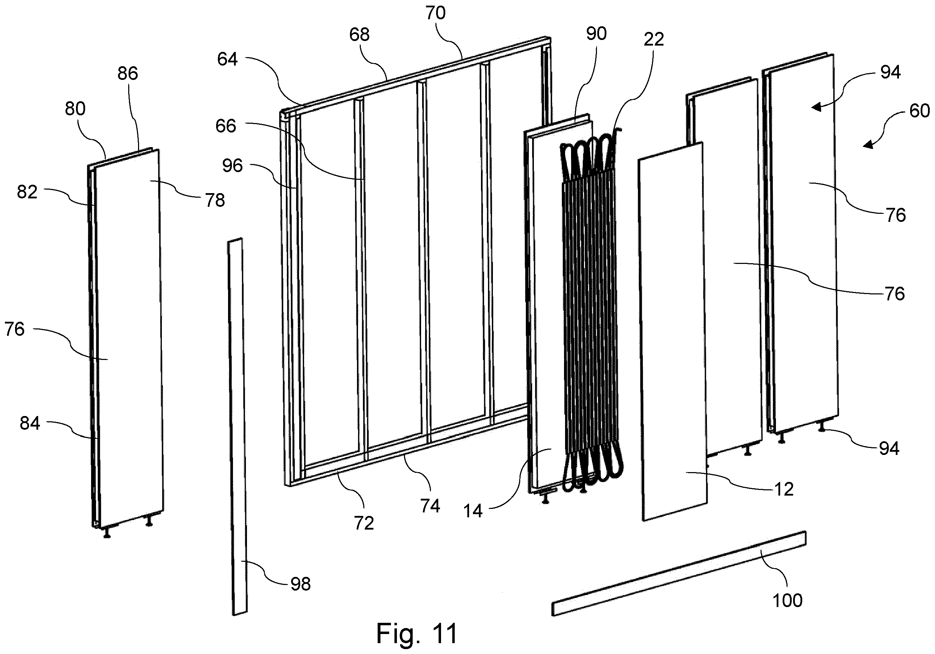

An internal wall 62 typically comprises a stud frame 64 including a plurality of stud members 66. As shown in Figure 11, the stud frame 64 usually comprises a head track 68, comprising an elongate header channel member 70, a base track 72, comprising an elongate base channel member 74, and a plurality of vertical or upright stud members 66 extending between the head track 68 and the base track 72. Each of the stud members 66, header channel member 70 and base channel member 74 are preferably made from a suitable steel material.

The upright stud members 66 are not fixed to the base track 72 or the head track 68 with mechanical fasteners. Instead, there is a friction fit of the ends of the upright stud members 66 between side plates of the base channel member 74 and the header channel member 70, respectively. In particular, a spacing or gap between the side plates of each of the base channel member 74 and the header channel member 70 is such that the side plates grip the respective ends of the upright stud members 66 when they are disposed within the header track 68 and base track 72.

The prefabricated walling system 60 may comprise a plurality of composite wall panels 76. Each of the composite wall panels 76 preferably includes a front panel 78, a rear panel 80 and an insulation panel 82 disposed between the front panel 78 and the rear panel 80. Each of the front panel 78 and the rear panel 80 may be made from a gypsum fibre board.

The composite wall panels 76 are designed to fit between the upright stud members 66 in such a way that side edge regions of each of the front and rear panels 78, 80 at least partially overlap one of the upright stud members 66 so that the front and rear panels 78, 80 may be secured to the upright stud members 66. With the composite wall panels 76 installed in this way, the insulation panel 82 is disposed between the front and rear panels 78, 80 across a thickness or depth of the internal wall 62, and the insulation panel 82 is disposed between neighbouring upright stud members 66 along a width or length of the internal wall 62. To allow this construction, it will be understood that a width of the insulation panel 82 is less than a width of each of the front and rear panels 78, 80 so that the side edge regions of the front and rear panels 78, 80 are free of insulation. In this way a rebate 84 is formed in each of the side edges of the composite wall panel 76 to receive the upright stud member 66.

At a top edge of each of the composite wall panels 76, the front and rear panels 78, 80 extend upwards above the top edge of the insulation panel 82. In this way a recess 86 is formed between the top edges of the front and rear panels 78, 80 to receive the header channel member 70. In the construction of the internal wall 62 the top edge of the composite wall panel 78 is generally not secured to the header channel member 70 to allow for relative movement between the ceiling to which the head track 68 is attached and the internal wall 62.

As the composite heating panel 10 may be used in the prefabricated walling system 60 interchangeably with or in place of one of the composite wall panels 76, it is necessary, in these embodiments, to provide a similar rebate 88 in side edges of the composite heating panel 10 and a similar recess 90 at a top edge of the composite heating panel 10.

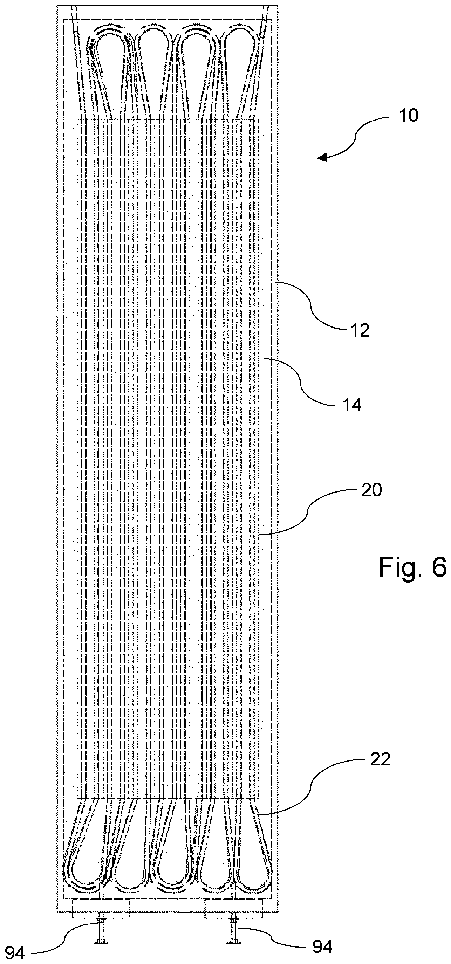

Referring now to Figures 1 and 6 to 8, in this embodiment the front panel 12 includes a perimeter region having a reduced thickness. The rear surface 34 of the front panel 12 includes a step, thereby forming a recessed edge 92 around the perimeter of the rear surface 34 of the front panel 12. In use as a wall panel, side regions of this recessed edge 92 overlap an upright stud member 66 and allow the composite heating panel 10 to be secured to the stud frame 64. It may be necessary to provide this recessed edge 92 in situations in which the thickness of the front panel 12 is greater than the thickness of the front panels 78 of the composite wall panels 76. The recessed edges 92 can accommodate this difference in thickness and allow the front surface 18 of the front panel 12 of the composite heating panel 10 to be aligned with and lie in the same plane as front surfaces 94 of the neighbouring composite wall panels 76. The greater thickness of the front panel 12 may be required to accommodate the pipework layer 22 as described above.

In the illustrated embodiment the insulated panel 14 includes a stepped edge so that a width of a rear portion of the insulated panel 14 adjacent the rear surface 52 is greater than a width of a forward portion of the insulated panel 14 adjacent the front surface 50. In this embodiment the width of the rear portion is the same as the width of the backing board 54. Similarly, a height of the rear portion of the insulated panel 14 adjacent the rear surface 52 is greater than a height of a forward portion of the insulated panel 14 adjacent the front surface 50. In this embodiment the height of the rear portion is the same as the height of the backing board 54. In this embodiment, a depth of the rear portion of the insulated panel 14 is less than the thickness of the backing board 54.

Accordingly, the rebate 88 in each of the side edges of the composite heating panel 10 is defined between a forward face of the stepped edge of the insulated panel 14 and the rear surface of the recessed edge 92, and the recess 90 at a top edge of the composite heating panel 10 is defined between a forward face of the stepped edge of the insulated panel 14 and the rear surface of the recessed edge 92.

Each of the composite wall panels 76, and each of the composite heating panels 10 when used as part of a prefabricated walling system 60, preferably includes a pair of support legs 94. The support legs 94 allow the composite wall panel 76 or composite heating panel 10 to be positioned underneath the head track 68 and then raised into a position in which the header channel member 70 is received in the recess 86, 90.

To construct an internal wall 62 using the composite wall panels 76 and composite heating panels 10 described above a user will first fix the head track 68 to a ceiling and a base track 72 to a floor. A first upright stud member 66a will then be positioned at a first end of the wall 62. In this example, illustrated in Figures 9 to 11, a first composite wall panel 76a is then located adjacent the first upright stud member 66a so that the first upright stud member 66a is received in the rebate 84 at a first side edge of the first composite wall panel 76a. A second upright stud member 66b is then located next to the first composite wall panel 76a so that the second upright stud member 66b is received in the rebate 84 at a second side edge of the first composite wall panel 76a. The support legs 94 of the first composite wall panel 76a can then be adjusted to engage the header channel member 70 in the recess 86. The side edges of the first composite wall panel 76a can then be secured to the first and second upright stud members 66a, 66b preferably using suitable mechanical fixing elements such as screws. A second composite wall panel 76b can then be installed next to the second upright stud member 66b in a similar manner.

In this embodiment a composite heating panel 10 is installed in place of a composite wall panel 76 between third and fourth upright stud members 66c, 66d. A third composite wall panel 76c is installed between fourth and fifth upright stud members 66d, 66e.

From the above description it will be understood that the fifth upright stud member 66e is installed after the third composite wall panel 76c. There must, therefore, be room to accommodate the insertion and positioning of the fifth upright stud member 66e. As shown in Figure 11, this results in a gap 96 between the fifth upright stud member 66e and an end upright stud member 66f. This gap 96 is preferably covered by a vertical closure strip 98. The material from which the vertical closure strip 98 is made is preferably the same as that of the front panels 12, 78.

Similarly, a horizontal closure strip 100 may be used to cover the support legs 94 and the base track 72.

As described above, the pipe inlet 24 and the pipe outlet 26 are connected to or continuous with further lengths of tubing that form part of the building's heating system. To enable this connection to be made, the pipe inlet 24 and the pipe outlet 26 may protrude from a part of the composite heating panel 10. In this embodiment, and as illustrated in Figure 9, the pipe inlet 24 and the pipe outlet 26 are configured to extend through apertures in the front panel 12 of the composite heating panel 10.

In preferred embodiments the building's heating system may include an air source heat pump. Water or other liquid flowing through the tubing 16 of the composite heating panel 10 is preferably heated by an air source heat pump. The temperature of the water or other liquid flowing through the tubing 16 may only be heated to a maximum temperature of about 30 °C.

The composite heating panel of the present invention may therefore provide a component of a system for delivering heat to an internal space that is more efficient than current heating systems. In particular, heated water or other fluid flowing through the system may be at a lower temperature than in prior art systems while still providing the required heating to an internal space.

Other modifications and variations not explicitly disclosed above may also be contemplated without departing from the scope of the invention as defined in the appended claims.

## Claims

1. A composite heating panel comprising:
a front panel having opposite front and rear surfaces;
a heat dissipation panel in contact with the rear surface of the front panel;
an insulated panel; and
an elongate length of tubing for receiving a flow of fluid therethrough, the fluid being at above ambient temperature,
wherein the length of tubing is disposed between the insulated panel and the heat dissipation panel, and the length of tubing follows a tortuous flow path including at least one bend.

2. A composite heating panel according to Claim 1, wherein the rear surface of the front panel includes a channel in which at least a part of the length of tubing is seated, and in which the heat dissipation panel is corrugated and includes at least one channel, and wherein the channel of the heat dissipation panel is disposed in the channel of the front panel, and a part of the length of tubing is seated in the channel of the heat dissipation panel.

3. A composite heating panel according to any preceding claim, wherein the length of tubing forms a pipework layer including a plurality of straight sections and a plurality of 180° bends, and in which the pipework layer includes a first 180° bend that lies on an inside of a second 180° bend.

4. A composite heating panel according to any preceding claim, wherein the heat dissipation panel is bonded to the front panel.

5. A composite heating panel according to Claim 9, wherein the insulated panel is bonded to the heat dissipation panel.

6. A composite heating panel according to any preceding claim, further comprising a backing board in contact with the insulated panel.

7. A composite heating panel according to any preceding claim, further comprising an inlet at a first end of the length of tubing and an outlet at a second end of the length of tubing, and in which the inlet and the outlet each extend through an aperture in the front panel.

8. A wall system comprising:
a stud member; and
a composite heating panel according to any one of Claims 1 to 7 positioned adjacent the stud member and secured to the stud member.

9. A wall system according to Claim 8, in which the composite heating panel is secured to the stud member on a first side of the stud member, and further comprising a pre-fabricated composite wall panel secured to the stud member on a second side of the stud member, the pre-fabricated composite wall panel comprising a front panel, a rear panel and an insulating panel between the front and rear panels.

10. A wall system according to Claim 9, in which a thickness of the composite heating panel is the same as a thickness of the pre-fabricated composite wall panel.

11. A wall system comprising:
a composite heating panel according to any one of Claims 1 to 7; and
an air source heat pump connected to the length of tubing.

12. A method of constructing an interior wall comprising:
positioning a composite heating panel according to any one of Claims 1 to 7 adjacent a stud member; and
securing the composite heating panel to the stud member using at least one mechanical fixing element.

13. A method according to Claim 12, in which the insulated panel of the composite heating panel includes a side edge including a recess, and wherein the method comprises locating the stud member in the rebate so that a part of the front panel of the composite heating panel overlaps the stud member.

14. A method according to Claim 12 or Claim 13, further comprising joining the length of tubing to a pipe of a building's heating system.

15. A method according to Claim 14, in which the building's heating system includes an air source heat pump.
